# EUROPÄISCHE PATENTSCHRIFT

(11) **EP 0 576 486 B1**
(45) Veröffentlichungstag und Bekanntmachung des Hinweises auf die Patenterteilung: **12.07.1995**
(21) Anmeldenummer: 92906559.7
(22) Anmeldetag: 18.03.1992
(51) Int. Cl.: F02P 5/15

(54) **SELBSTTÄTIGE ZÜNDZEITPUNKT-ANPASSUNG BEI DYNAMIK-VORGÄNGEN FÜR EINE FREMDGEZÜNDETE BRENNKRAFTMASCHINE**
AUTOMATIC ADAPTATION OF SPARK TIMING IN DYNAMIC PROCESSES FOR A SPARK-IGNITION INTERNAL COMBUSTION ENGINE
ADAPTATION AUTOMATIQUE DU POINT D'ALLUMAGE EN REGIME DYNAMIQUE POUR UN MOTEUR A COMBUSTION INTERNE A ALLUMAGE COMMANDE

(30) Priorität: 22.03.1991 DE 4109429
(43) Veröffentlichungstag der Anmeldung: 05.01.1994
(73) Patentinhaber: AUDI AG, 85045 Ingolstadt (DE)
(72) Erfinder: PFALZGRAF, Bernhard, D-8070 Ingolstadt (DE); GIBTNER, Siegfried, D-8074 Gaimersheim (DE)
(74) Vertreter: Le Vrang, Klaus
(86) Internationale Anmeldenummer: EP9200582
(87) Internationale Veröffentlichungsnummer: WO9216739

(56) Entgegenhaltungen:
- WO-A-89/12746
- WO-A-91/14097
- FR-A- 2 543 223
- GB-A- 2 231 917
- GB-A- 2 234 292
- US-A- 4 268 910

## Beschreibung

Die Erfindung betrifft ein Verfahren zur selbsttätigen Zündzeitpunkt-Anpassung bei Dynamik-Vorgängen für eine fremdgezündete Brennkraftmaschine nach dem Oberbegriff des Anspruchs 1.

Für den optimierten Betrieb einer fremdgezündeten Brennkraftmaschine ist es erforderlich, den Zündzeitpunkt in Abhängigkeit der Drehzahl und Last zu verändern. Dazu sind im Rahmen von Motorsteuereinrichtungen elektronische Zündeinrichtungen bekannt, mit Kennfeldern, in denen in Abhängigkeit von Betriebsparametern Kennfeldwerte als Zündzeitpunkt-Vorgabewerte abgelegt sind, die für einen aktuellen Zündzeitpunkt jeweils ausgelesen werden.

Im Rahmen von Motorsteuereinheiten sind auch Einrichtungen bekannt, die einen Dynamikvorgang bzw. dessen Beginn feststellen und ein zugeordnetes Auslösesignal abgeben.

Eine weitere, bekannte Optimierung hinsichtlich eines geringen Kraftstoffverbrauchs und geringen Schadstoffausstoßes wird dadurch erreicht, daß die Brennkraftmaschine im höheren Last- und Drehzahlbereich nahe an der Klopfgrenze betrieben wird. Da die Lage der Klopfgrenze variabel ist und von Betriebsparametern, insbesondere der Treibstoffqualität, der Temperatur und des Luftdrucks abhängt, ist es bekannt, eine Klopfregelung durchzuführen. Dabei wird beim Auftreten von Klopfereignissen der aus dem abgelegten Kennfeld ausgelesene Zündzeitpunkt-Vorgabewert um einen Regelhub auf einen Wert für einen aktuellen Zündzeitpunkt in Richtung Spätzündung zurückgenommen. Beim weiteren Ausbleiben von Klopfereignissen wird der Wert für den aktuellen Zündzeitpunkt um einen Regelhub in Richtung Frühzündung wieder auf den Zündzeitpunkt-Vorgabewert hingeführt. In einer solchen Regelschaltung ist eine Einrichtung zur Feststellung klopfender Verbrennungen enthalten (US-A-4 268 910).

Es ist bekannt, daß bei Dynamikvorgängen, beispielsweise beim schnellen Betätigen des Gaspedals für eine höhere Lastanforderung, eine erhöhte Klopfgefahr in Form des sogenannten Beschleunigungs-Klopfens besteht, insbesondere dann, wenn die Brennkraftmaschine bereits in der Nähe der Klopfgrenze betrieben wird.

Diese Gefahr besteht auch dann, wenn eine Klopfregelung vorgesehen ist, da diese der erhöhten Klopfneigung nur durch nachträgliches Zurückregeln begegnen kann. Es müssen somit auch hier eine Mehrzahl zum Teil heftiger Klopfer nachteilig in Kauf genommen werden.

Die Lasterfassung über den Druck ist zu langsam, so daß die Zündzeitpunkte aus dem Kennfeld bei Dynamik-Vorgängen für den aktuellen Betriebspunkt zu früh liegen. Bei einer üblichen Klopfregelung erfolgt keine Vorsteuerung beim Übergang in neue Kennfeldbereiche; bei Dynamikvorgängen tritt somit ein Klopfen zunächst auf, worauf erst die Klopfregelung reagiert.

Aufgabe der Erfindung ist es demgegenüber, ein Verfahren zur selbsttätigen Zündzeitpunkt-Anpassung bei Dynamik-Vorgängen so weiterzubilden, daß die Anzahl von Klopfereignissen verringert und der Betrieb der Brennkraftmaschine weiter optimiert wird.

Diese Aufgabe wird mit den Merkmalen des Anspruchs 1 gelöst.

Nach Anspruch 1 sind in einer Drehzahlkennlinie in Abhängigkeit der Drehzahl der Brennkraftmaschine Werte als Dynamik-Spätverstellwerte ablegbar. Bei der Feststellung eines Dynamik-Vorgangs mit sich erhöhender Lastanforderung durch die entsprechende Einrichtung wird ein der gerade zutreffenden Betriebsdrehzahl der Brennkraftmaschine entsprechender Dynamik-Spätverstellwert aus der Drehzahlkennlinie entnommen. Dieser Dynamik-Spätverstellwert wird dem Zündzeitpunkt-Vorgabewert addiert, so daß ein Dynamik-Vorgabewert als Gesamtwert erhalten wird.

Mit diesem Dynamik-Vorgabewert wird die Brennkraftmaschine unmittelbar nach Feststellung des Dynamik-Vorgangs betrieben. Dieser Dynamik-Vorgabewert wird eine bestimmte, vorgegebene Wartezeit beibehalten und anschließend auf den Zündzeitpunkt-Vorgabewert, wie er aus der Zündeinrichtung für stationären Betrieb zur Verfügung gestellt wird, zurückgeführt.

Damit wird erreicht, daß sofort nach Feststellung des Beginns eines Dynamik-Vorgangs der Zündzeitpunkt um den Dynamik-Spätverstellwert zurückgenommen wird, so daß die Gefahr eines Beschleunigungsklopfens erheblich verringert wird. Bei Vorgabe einer geeigneten, relativ kurzen Wartezeit für die Rückführung werden schnell wieder die optimalen Zündzeitpunktwerte für den stationären Betrieb oder einen Betrieb mit nur geringer Dynamik erreicht.

Eine besonders vorteilhafte Eigenschaft der erfindungsgemäßen Zündzeitpunkt-Anpassung besteht weiter darin, daß die in Abhängigkeit der Drehzahl abgelegten und zur Verfügung stehenden Dynamik-Spätverstellwerte nicht konstant gehalten sind, sondern in der Art eines Lernprozesses Veränderungen erfahren und sich selbst optimieren:

Dazu wird bei dem Dynamik-Vorgang mit sich erhöhender Lastanforderung eine bestimmte Beobachtungszeit in Lauf gesetzt, in der ggfs. klopfende Verbrennungen als Klopfereignisse festgestellt werden. Bei klopfender Verbrennung während der Beobachtungszeit wird der Dynamik-Spätverstellwert, der der Drehzahl zu Beginn des Dynamik-Vorgangs bzw. zu Beginn der Beobachtungszeit entspricht, um einen bestimmten Spät-Korrekturwert vergrößert. Bei klopffreier Verbrennung während der Beobachtungszeit wird dieser Dynamik-Spätverstellwert dagegen um einen bestimmten Früh-Korrekturwert verringert, sofern ein Dynamik-Spätverstellwert größer Null am entsprechenden Drehzahlwert abgelegt ist.

Die so korrigierten Dynamik-Verstellwerte stehen jeweils für die entsprechende Drehzahl bei jedem neuen Dynamik-Vorgang zur Verfügung, wobei jeweils eine Wegbewegung aus dem klopfkritischen Bereich bzw. eine Herantastung an diesen Bereich für einen optimalen Betrieb während des Dynamik-Vorgangs erfolgt.

Zusammenfassend ist festzustellen, daß mit den Merkmalen des Anspruchs 1 eine schnelle Zündzeitpunkt-Anpassung für einen optimierten Betrieb bei Dynamik-Vorgängen mit sich erhöhender Lastanforderung zur Reduzierung des Beschleunigungsklopfens möglich wird.

Vorteilhaft wird nach Anspruch 2 für jeden Zylinder eine eigene Drehzahlkennlinie vorgesehen, so daß sich die dort abgelegten und korrigierten Dynamik-Spätverstellwerte zylinderspezifisch bilden und einstellen können.

Zur Verringerung der erforderlichen Speicherkapazität für die Dynamik-Spätverstellwerte wird in an sich bekannter Weise mit Anspruch 3 vorgeschlagen, Drehzahlbereiche vorzusehen, in denen gleiche bzw. nur ein Dynamik-Spätverstellwert abgelegt ist. Als geeignet haben sich hier 16 gleiche, aufeinanderfolgende Stützstellenbereiche erwiesen, die eine ausreichend gute Abstufung ergeben.

Für eine gute Einstellung auf das Klopfverhalten wird mit Anspruch 4 vorgeschlagen, daß bei mehreren Klopfereignissen während der Beobachtungszeit entsprechend viele Spätkorrekturwerte addiert werden.

Mit der Maßnahme nach Anspruch 5 wird das Verfahren zur Zündzeitpunkt-Anpassung weiter verfeinert und abgestimmt, indem unterschiedlich schnelle Dynamik-Vorgänge, bevorzugt zwei unterschiedliche Beschleunigungswerte, erfaßt werden. Für jeden dieser Werte steht eine unterschiedliche Drehzahlkennlinie zur Verfügung, die durch die entsprechenden Auslösesignale jeweils angesteuert wird. Damit kann sich die Anordnung durch die erfindungsgemäßen Lernprozesse auf ein unterschiedliches Klopfverhalten bei unterschiedlich schnellen Dynamik-Vorgängen einstellen.

In einer einfacheren Ausführung ist die Wartezeit bis zum Beginn des Rückführvorgangs für alle Betriebszustände fest vorgegeben. Eine verbesserte Anpassung ist nach Anspruch 6 dadurch erreichbar, daß die Wartezeit mit unterschiedlichen Werten aus einer Wartezeit-Kennlinie über der Drehzahl vorgegeben ist und entsprechend der Betriebsdrehzahl zu Beginn des Dynamik-Vorgangs entnommen wird. Es kann somit für jeden Drehzahlwert bzw. Drehzahlbereich eine unterschiedlich lange Wartezeit vorgegeben werden. Zweckmäßig wird die Wartezeit als Zählwert für eine Anzahl von Zündungen vorgegeben. Bei höheren Drehzahlen sind somit mehr Zündungen zu zählen, um eine gleiche Zeitlänge entsprechend niederen Drehzahlwerten zu erhalten. Diese Anzahlwerte von Zündungen können beispielsweise in der Wartezeit-Kennlinie berücksichtigt werden. Falls eine weitere Feinanpassung gewünscht oder erforderlich wird, können auch mehrere Wartezeit-Kennlinien mit einer zylinderselektiven Zuordnung oder einer Zuordnung für unterschiedlich schnelle Dynamik-Vorgänge verwendet werden.

Grundsätzlich ist es möglich, die Rückführung des Dynamik-Vorgabewerts auf den (stationären) Zündzeitpunkt-Vorgabewert sofort nach Ablauf der Wartezeit durchzuführen. Ein wesentlich verbessertes Verhalten zeigt sich jedoch nach Anspruch 7, wenn diese Rückführung stufenförmig, insbesondere bei jedem Zündvorgang, um einen bestimmten Rückführ-Frühverstellwert erfolgt.

Auch die Rückführung kann für eine verbesserte Feinanpassung in einer oder mehreren Rückführ-Kennlinien über der Drehzahl mit unterschiedlichen Rückführ-Frühverstellwerten und ggfs. zeitlich unterschiedlichen Stufenlängen nach Anspruch 8 abgelegt werden. Auch hier kann nur eine Rückführ-Kennlinie für alle Zylinder und alle Dynamik-Vorgänge vorgesehen sein, wo die Werte drehzahlabhängig entnommen werden. Es können jedoch auch mehrere Rückführ-Kennlinien einzelnen Zylindern und unterschiedlich schnellen Dynamik-Vorgängen zugeordnet sein.

In einer bevorzugten Ausführung nach Anspruch 9 wird die Beobachtungszeit zur Feststellung von Klopfereignissen mit unterschiedlichen Zeitwerten aus einer oder mehreren Beobachtungszeit-Kennlinien über der Drehzahl vorgegeben und entsprechend der Betriebsdrehzahl zu Beginn des Dynamik-Vorgangs entnommen. Auch hier kann eine Zuordnung unterschiedlicher Kennlinien zu den einzelnen Zylindern und/oder zu unterschiedlich schnellen Dynamik-Vorgängen erfolgen. Vorteilhaft wird die Beobachtungszeit als Zählwert für die Anzahl von Zündungen vorgegeben und abgelegt, da die Zündvorgänge ohnehin erfaßt werden. Für hohe Drehzahlen kann dann zum Erhalt eines geeignet großen Zeitintervalls eine größere Anzahl von Zündungen zugrundegelegt werden.

Entsprechend können auch die Spätkorrekturwerte und/oder die Frühkorrekturwerte nach Anspruch 10 als unterschiedliche Werte in einer oder mehreren Korrekturwert-Kennlinien über der Drehzahl vorgegeben werden. Auch hier ist eine Zuordnung von Kennlinien zu einzelnen Zylindern oder unterschiedlich schnellen Dynamik-Vorgängen möglich.

Um für den allerersten Betrieb einer Brennkraftmaschine oder nach einem Verlust von Speicherwerten eine Ausgangsbasis für die erfindungsgemäße Zündzeitpunkt-Anpassung zu erhalten, wird mit Anspruch 11 eine Initialisierungs-Kennlinie mit allgemein etwa zutreffenden Dynamik-Spätverstellwerten vorgegeben. Erst wenn beim Betrieb der Brennkraftmaschine die erfindungsgemäße Zündzeitpunkt-Anpassung in einzelnen Drehzahlbereichen eingegriffen hat, werden diese Initialisierungswerte nach dem erfindungsgemäßen Lernprozeß durch die Spätkorrekturwerte bzw. Frühkorrekturwerte verändert und optimiert. Diese optimierten Werte werden auch beim Abstellen der Brennkraftmaschine im Speicher erhalten (beispielsweise Speicherung in EEPROM) und stehen nach dem Start im Normalfall sofort wieder zur Verfügung.

Bei einem Fehler in der Schaltung könnte es vorkommen, daß Spätkorrekturwerte ständig nacheinander zu den Dynamik-Spätverstellwerten addiert werden und somit diese zu ungünstigen, großen Werten weglaufen. Zum Schutz gegen ein solches Weglaufen wird mit Anspruch 12 eine einfache Maßnahme vorgeschlagen, indem eine Begrenzung auf Maximal-Dynamik-Verstellwerte vorgesehen ist. Zweckmäßig ist als Begrenzung eine Kennlinie über der Drehzahl mit ggfs. unterschiedlichen Begrenzungswerten vorgesehen.

Eine einfache Einrichtung zur Feststellung eines Dynamik-Vorgangs ist nach Anspruch 13 aus einem Saugrohrdruck-Aufnehmer, einem Differenzierglied und einem Schwellwertgeber herzustellen. Dabei wird der zeitliche Ableitungswert dp/dt mit einem Schwellwert verglichen. Nur beim Überschreiten dieses Schwellwerts wird ein genügend schneller Dynamik-Vorgang signalisiert, bei dem die erfindungsgemäße Zündzeitpunkt-Anpassung eingreifen soll. Auf einfache Weise können hier auch mehrere, unterschiedliche Schwellwerte zur Erkennung unterschiedlich schneller Dynamik-Vorgänge realisiert werden. In einer ähnlichen Einrichtung nach Anspruch 14 wird die zeitliche Veränderung der Drosselklappenstellung mit Hilfe eines Stellungsgebers erfaßt.

Gemäß Anspruch 15 wird eine alternative Ausführung für eine Einrichtung zur Feststellung des Dynamik-Vorgangs vorgeschlagen, die aus einem Stellungsgeber für die Winkelstellung der Drosselklappe, einem in Abhängigkeit der Drehzahl und des Drosselklappenwinkels abgelegten Kennfeld für den Saugrohrabsolutdruck (p) und einem Schwellwertgeber zum Vergleich des Ableitungswerts des Saugrohrabsolutdrucks (dp/dt) mit einem oder mehreren Schwellwerten besteht. Ein Dynamik-Vorgang liegt dann vor, wenn der Ableitungswert größer als die vorgegebenen Schwellwerte ist. Die Ermittlung des Saugrohrabsolutdrucks erfolgt hier nicht direkt über einen Druckaufnehmer, sondern indirekt über Druckwerte, die in Abhängigkeit der Drehzahl und des Drosselklappenwinkels in dem vorgenannten Kennfeld abgelegt sind. Damit wird vorteilhaft eine schnellere Lasterfassung gegenüber einer Lasterfassung direkt über den Drosselklappenwinkel erreicht, ohne den Nachteil einer relativ schlechten Auflösung, wie er insbesondere bei niedrigen Drehzahlen auftritt.

Anhand der Zeichnung wird die Erfindung mit weiteren Merkmalen, Einzelheiten und Vorteilen näher erläutert.

Es zeigen
- Fig. 1: eine erste Drehzahlkennlinie mit Dynamik-Spätverstellwerten,
- Fig. 2: eine Wartezeit-Kennlinie,
- Fig. 3: die Darstellung des zeitlichen Ablaufs einer Zündzeitpunkt-Anpassung bei einem Dynamik-Vorgang,
- Fig. 4: eine zweite Drehzahlkennlinie für einen gegenüber der Fig. 1 schnelleren Dynamik-Vorgang,
- Fig. 5: eine Kennlinie für Korrekturwerte und
- Fig. 6: eine Beobachtungszeit-Kennlinie.

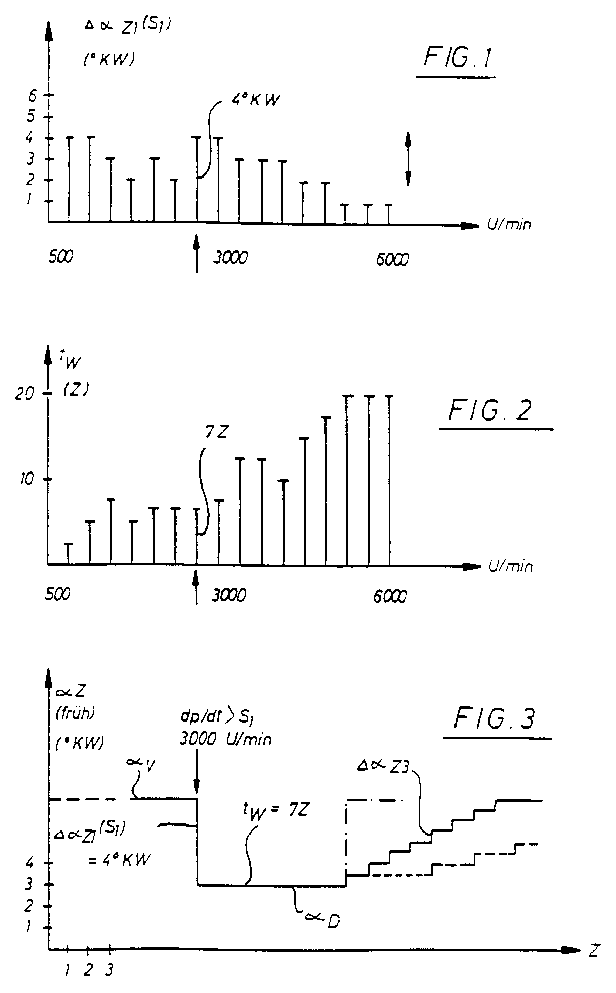

In Fig. 1 ist eine erste Drehzahlkennlinie dargestellt, die in 16 Drehzahlbereiche aufgeteilt ist. Jedem dieser Drehzahlbereiche ist ein Dynamik-Spätverstellwert zugeordnet, beispielsweise dem Wert 3.000 U/min der Dynamik-Spätverstellwert von 4° KW. Mit dem eingezeichneten Doppelpfeil soll angedeutet werden, daß diese Dynamik-Spätverstellwerte in einem später erläuterten Lernprozeß in ihrer Größe durch Addition von Spätkorrekturwerten und Verringerung mit Frühkorrekturwerten veränderlich sind.

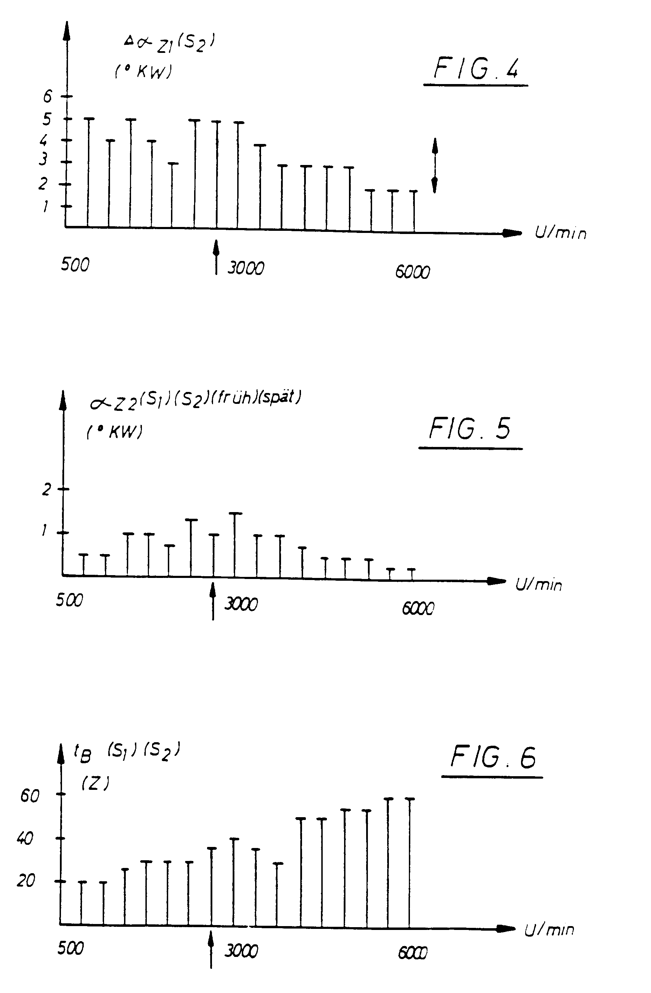

Die Bezeichnung Δ α _{Z1} steht für abgelegte Dynamik-Spätverstellwerte. Der Zusatz S₁ bedeutet, daß diese Drehzahlkennlinie einem Schwellwert S₁ zugeordnet ist. Wird die zeitliche Veränderung des Saugrohrdrucks dp/dt größer S₁ erreicht (jedoch kleiner einer höheren Schwelle S₂ entsprechend Fig. 4), werden die in Fig. 1 enthaltenen Dynamik-Spätverstellwerte für die Zündzeitpunkt-Anpassung verwendet.

In Fig. 2 ist eine Wartezeit-Kennlinie dargestellt, bei der drehzahlzugeordnet Wartezeiten t_{W} für die Rückführung von Dynamik-Vorgabewerten α _{D} auf Zündzeitpunktvorgabewerte α _{V} dargestellt sind. Die Wartezeiten sind in Anzahlen registrierter Zündungen abgelegt. Beispielsweise erfolgt eine Rückführung bei einer erfolgten Zündzeitpunkt-Anpassung bei 3.000 U/min nach 7 Zündungen (7Z), wie auch aus dem Zeitdiagramm nach Fig. 3 ersichtlich ist.

In Fig. 3 ist der zeitliche Ablauf einer Zündzeitpunkt-Anpassung bei einem Dynamik-Vorgang dargestellt:
In einem praktisch stationären Betrieb wird von der Zündeinrichtung ein Zündzeitpunkt-Vorgabewert α _{V} vorgegeben. An der durch einen Pfeil markierten Stelle wird die Einleitung eines Dynamik-Vorgangs erkannt, wobei die zeitliche Veränderung des Saugrohrdrucks dp/dt den Schwellwert S₁ übersteigt. Zudem wird die gerade laufende Betriebsdrehzahl mit 3.000 U/min festgestellt.

Erfindungsgemäß wird dabei der aus Fig. 1 ersichtliche Wert bei 3.000 U/min von 4° KW in Richtung Spätzündung sofort auf den Dynamik-Vorgabewert α _{D} zurückgenommen. Dieser Wert wird über die Wartezeit von 7 Zündungen (7Z), wie aus Fig. 2 bei 3.000 U zu entnehmen ist, gehalten, bevor eine Rückführung auf den Zündzeitpunkt-Vorgabewert α _{V} erfolgt.

In Fig. 3 sind drei Alternativen einer Rückführung angegeben. In der ersten Alternative (strichpunktierte Linie) wird nach Ablauf der Wartezeit t_{W} die Rückstellung sofort durchgeführt. In der bevorzugten Ausführung (durchgehende Linie) wird die Rückführung stufenförmig mit einem konstanten Rückführwert Δ α _{Z3} bei jeder Zündung durchgeführt. Im dargestellten Beispiel ist der Wert Δ α _{Z3} gleich 0,5° KW. In einer dritten Ausführung (strichlierte Linie) kann die Rückführung in unterschiedlich langen Stufen und ggfs. unterschiedlichen Stufenhöhen aus einem (nicht dargestellten) Kennfeld gesteuert werden.

In Fig. 4 ist eine zweite Drehzahlkennlinie entsprechend der Fig. 1 dargestellt, wobei jedoch diese Drehzahlkennlinie einem höher liegenden Schwellwert S₂, das heißt einem schnelleren Dynamik-Vorgang, zugeordnet ist. Bei einem schneller ablaufenden Dynamik-Vorgang wird üblicherweise ein größerer Eingriff über die erfindungsgemäße Anpassung erforderlich, so daß damit auch die in dieser Drehzahlkennlinie anzutreffenden Dynamik-Spätverstellwerte Δ α _{Z1} (S₂) in der Regel größer als in Fig. 1 sein werden. Auch hier soll der Doppelpfeil anzeigen, daß die Werte durch einen selbsttätigen Lernprozeß veränderbar sind.

Der selbsttätige Lernprozeß besteht darin, daß bei klopfender Verbrennung während einer Beobachtungszeit t_{B} der Dynamik-Verstellwert Δ α _{Z1}, der der Drehzahl zu Beginn des Dynamik-Vorgangs entspricht, um einen bestimmten Spätkorrekturwert vergrößert wird bzw. bei klopffreier Verbrennung verringert wird. Bei mehreren Klopfereignissen während der Beobachtungszeit t_{B} werden entsprechend viele Spätkorrekturwerte addiert.

In Fig. 5 ist eine Korrekturwert-Kennlinie über der Drehzahl dargestellt. Es sollen bei der vorliegenden Ausführung die gleichen Korrekturwerte (drehzahlbezogen) für die Spätkorrektur und die Frühkorrektur sowie für die unterschiedlich schnellen Dynamik-Vorgänge S₁ und S₂ verwendet werden. Ersichtlich könnten aber hier jeweils eigene Korrekturwerte α _{Z2} in unterschiedlichen Korrekturkennlinien für die einzelnen Gegebenheiten abgelegt sein.

In Fig. 6 ist eine Beobachtungszeitkennlinie für die Beobachtungszeit t_{B} dargestellt, innerhalb der drehzahlbezogen Klopfereignisse festgestellt werden. Diese Beobachtungszeiten sollen in der vorliegenden Ausführung gleich sein für schnelle und langsame Dynamik-Vorgänge S₁ und S₂. Auch hier sind die Beobachtungszeiten t_{B}, ähnlich wie in Fig. 2, in Anzahl von Zündungen abgelegt. Während für die Wartezeit t_{W} eine bevorzugte Anzahl von ca. 5 bis 20 Zündungen in Frage kommt, liegen die bevorzugten Werte für die Beobachtungszeit bei ca. 20 bis 60 Zündungen.

## Patentansprüche

1. Verfahren zur selbsttätigen Zündzeitpunkt-Anpassung bei Dynamik-Vorgängen für eine fremdgezündete Brennkraftmaschine,
mit einer elektronischen Zündeinrichtung, die in Abhängigkeit von Betriebsparametern einen Kennfeldwert als Zündzeitpunkt-Vorgabewert (α _{V}) abgibt,
mit einer Einrichtung, die einen Dynamik-Vorgang bzw. dessen Beginn feststellt und ein zugeordnetes Auslösesignal abgibt und
mit einer Einrichtung zur Feststellung klopfender Verbrennungen,
dadurch gekennzeichnet,
daß in einer Drehzahlkennlinie in Abhängigkeit der Drehzahl der Brennkraftmaschine Werte als Dynamik-Spätverstellwerte (Δ α _{Z1}) ablegbar sind,
daß bei einem Dynamik-Vorgang mit sich erhöhender Lastanforderung ein der gerade zutreffenden Betriebsdrehzahl der Brennkraftmaschine entsprechender Dynamik-Spätverstellwert (Δ α _{Z1}) aus der Drehzahlkennlinie entnommen wird,
daß dieser Dynamik-Spätverstellwert (Δ α _{Z1}) in Richtung Spätverstellung dem Zündzeitpunkt-Vorgabewert (α _{V}) zu einem Dynamik-Vorgabewert (α _{D}) zuaddiert wird,
daß dieser Dynamik-Vorgabewert (α _{D}) eine bestimmte, vorgegebene Wartezeit (t_{W}) beibehalten wird und anschließend wieder auf den Zündzeitpunkt-Vorgabewert (α _{V}) aus der Zündeinrichtung zurückgeführt wird,
daß bei dem Dynamik-Vorgang mit sich erhöhender Lastanforderung eine bestimmte Beobachtungszeit (t_{B}) in Lauf gesetzt wird, in der klopfende Verbrennungen als Klopfereignisse festgestellt werden,
daß bei klopfender Verbrennung während der Beobachtungszeit (t_{B}) der Dynamik-Spätverstellwert (Δ α _{Z1}), der der Drehzahl zu Beginn des Dynamik-Vorgangs bzw. zu Beginn der Beobachtungszeit entspricht, um einen bestimmten Spät-Korrekturwert (Δ α _{Z2}) vergrößert wird und
daß bei klopffreier Verbrennung während der Beobachtungszeit der Dynamik-Spätverstellwert (Δ α _{Z1}), der der Drehzahl zu Beginn des Dynamik-Vorgangs bzw. zu Beginn der Beobachtungszeit entspricht, sofern ein Dynamik-Spätverstellwert (Δ α _{Z1}) größer Null abgelegt ist, um einen bestimmten Früh-Korrekturwert (Δ α _{Z2}) verringert wird.

2. Verfahren zur selbsttätigen Zündzeitpunkt-Anpassung nach Anspruch 1, dadurch gekennzeichnet, daß für jeden Zylinder eine Drehzahlkennlinie vorgesehen ist.

3. Verfahren zur selbsttätigen Zündzeitpunkt-Anpassung nach Anspruch 1 oder 2, dadurch gekennzeichnet, daß in den Drehzahlkennlinien Drehzahlbereiche, bevorzugt 16 gleiche Stützstellenbereiche, mit zugeordneten, in den Bereichen gleichen Dynamik-Spätverstellwerten (Δ α _{Z2}) vorgesehen sind.

4. Verfahren zur selbsttätigen Zündzeitpunkt-Anpassung nach einem der Ansprüche 1 bis 3, dadurch gekennzeichnet, daß bei mehreren Klopfereignissen während der Beobachtungszeit (t_{B}) entsprechend viele Spät-Korrekturwerte (Δ α _{Z2}) addiert werden.

5. Verfahren zur selbsttätigen Zündzeitpunkt-Anpassung nach einem der Ansprüche 1 bis 4, dadurch gekennzeichnet, daß wenigstens zwei unterschiedlich schnelle Dynamik-Vorgänge (S₁; S₂) erfaßbar sind und entsprechend unterschiedliche, zugeordnete Auslösesignale abgegeben werden,
daß den jeweils unterschiedlich schnellen Dynamik-Vorgängen unterschiedliche Drehzahlkennlinien (Δ α _{Z1}(S₁); Δ α _{Z1}(S₂)) zugeordnet sind, die durch die entsprechenden Auslösesignale angesteuert werden.

6. Verfahren zur selbsttätigen Zündzeitpunkt-Anpassung nach einem der Ansprüche 1 bis 5, dadurch gekennzeichnet, daß die Wartezeit (t_{W}) mit unterschiedlichen Werten aus einer Wartezeitkennlinie über der Drehzahl vorgegeben ist und entsprechend der Betriebsdrehzahl zu Beginn des Dynamik-Vorganges entnommen wird.

7. Verfahren zur selbsttätigen Zündzeitpunkt-Anpassung nach einem der Ansprüche 1 bis 6, dadurch gekennzeichnet, daß die Rückführung des Dynamik-Vorgabewerts (α _{D}) auf den stationären Zündzeitpunkt-Vorgabewert (α _{V}) stufenförmig bei jedem Zündvorgang um einen bestimmten Rückführ-Frühverstellwert (Δ α _{Z3}) erfolgt.

8. Verfahren zur selbsttätigen Zündzeitpunkt-Anpassung nach Anspruch 7, dadurch gekennzeichnet, daß die Rückführung in einer oder mehreren Rückführ-Kennlinien über der Drehzahl mit unterschiedlichen Rückführ-Frühverstellwerten (Δ α _{Z3}) und ggfs. zeitlich unterschiedlichen Stufenlängen abgelegt ist.

9. Verfahren zur selbsttätigen Zündzeitpunkt-Anpassung nach einem der Ansprüche 1 bis 8, dadurch gekennzeichnet, daß die Beobachtungszeit (t_{B}) zur Feststellung von Klopfereignissen mit unterschiedlichen Werten aus einer oder mehreren Beobachtungszeit-Kennlinien über der Drehzahl vorgegeben ist ggfs. mit Zuordnung unterschiedlicher Werte zu unterschiedlich schnellen Dynamik-Vorgängen (S₁; S₂) und entsprechend der Betriebsdrehzahl zu Beginn des Dynamik-Vorgangs entnommen wird.

10. Verfahren zur selbsttätigen Zündzeitpunkt-Anpassung nach einem der Ansprüche 1 bis 9, dadurch gekennzeichnet, daß der Spät-Korrekturwert (Δ α _{Z2}) und/oder der Früh-Korrekturwert (Δ α _{Z2}) mit unterschiedlichen Werten aus einer oder mehreren Korrekturwert-Kennlinien über der Drehzahl vorgegeben sind ggfs. mit Zuordnung unterschiedlicher Werte zu unterschiedlich schnellen Dynamik-Vorgängen (S₁; S₂) und/oder einzelnen Zylindern und entsprechend der Betriebsdrehzahl zu Beginn des Dynamik-Vorgangs entnommen werden.

11. Verfahren zur selbsttätigen Zündzeitpunkt-Anpassung nach einem der Ansprüche 1 bis 10, dadurch gekennzeichnet, daß als Ausgangsbasis eine Initialisierungs-Kennlinie mit bevorzugt für alle Zylinder gleichen Dynamik-Spätverstellwerten (Δ α _{Z1}) vorgesehen ist.

12. Verfahren zur selbsttätigen Zündzeitpunkt-Anpassung nach einem der Ansprüche 1 bis 11, dadurch gekennzeichnet, daß zum Schutz gegen ein Weglaufen der Anpassung eine Begrenzung auf Maximal-Dynamik-Verstellwerte vorgesehen ist.

13. Verfahren zur selbsttätigen Zündzeitpunkt-Anpassung nach einem der Ansprüche 1 bis 12, dadurch gekennzeichnet, daß die Einrichtung zur Feststellung des Dynamik-Vorgangs aus einem Druckaufnehmer zur Feststellung des Saugrohrdrucks, einem Differenzierglied zur Feststellung der zeitlichen Ableitung einer Druckveränderung (dp) und einem Schwellwertgeber zum Vergleich des Ableitungswerts (dp/dt) mit einem oder mehreren Schwellwerten (S₁; S₂) besteht.

14. Verfahren zur selbsttätigen Zündzeitpunkt-Anpassung nach einem der Ansprüche 1 bis 12, dadurch gekennzeichnet, daß die Einrichtung zur Feststellung des Dynamik-Vorgangs aus einem Stellungsgeber für die Drosselklappenstellung, einem Differenzierglied zur Feststellung der zeitlichen Ableitung einer Stellungsänderung (ds) und einem Schwellwertgeber zum Vergleich des Ableitungswerts (ds/dt) mit einem oder mehreren Schwellwerten besteht.

15. Verfahren zur selbsttätigen Zündzeitpunkt-Anpassung nach einem der Ansprüche 1 bis 12, dadurch gekennzeichnet, daß die Einrichtung zur Feststellung des Dynamik-Vorgangs aus einem Stellungsgeber für die Winkelstellung der Drosselklappe, einem in Abhängigkeit der Drehzahl und des Drosselklappenwinkels abgelegten Kennfeld für den Saugrohrabsolutdruck (p) und einem Schwellwertgeber zum Vergleich des Ableitungswerts des abgelegten Saugrohrabsolutdrucks (dp/dt) mit einem oder mehreren Schwellwerten besteht.

## Claims

1. Method for automatic adaptation of spark timing in dynamic processes for a spark-ignition internal combustion engine,
with an electronic ignition device which in dependence on operating parameters emits a performance data value as a prorated ignition timing value (α_{V}),
with a device which detects a dynamic process, or rather the start thereof, and emits an associated triggering signal, and
with a device for detecting combustion knock,
characterised in that
values can be stored as dynamic ignition retard values (Δ α _{Z1}) in an engine speed characteristic in dependence on the speed of the internal combustion engine,
in the event of a dynamic process with an increasing load requirement, a dynamic ignition retard value (Δ α_{Z1}) matching just the operating speed of the internal combustion engine is deduced from the speed characteristic,
this dynamic ignition retard value (Δ α _{Z1}) is incremented by the prorated ignition timing value (α_{Z1}) in the direction of retard adjustment to provide a prorated dynamic value (α_{D}),
this prorated dynamic value (α_{D}) lasts for a certain predetermined waiting time (t_{W}) and after this time vanishes so that the ignition value is reduced to the prorated ignition timing value (α_{V}) from the ignition device,
in the event of the dynamic process with increasing load requirement, a given observation time (t_{B}) is set in progress, during which combustion knocks are detected as knocking episodes,
should combustion knock occur during the observation time (t_{B}), the dynamic retard value (Δ α _{Z1}), which matches the speed at the start of the dynamic process, or rather at the start of the observation time, is increased by a given retard correction value (Δ α _{Z2}), and
should no combustion knock occur during the observation time (t_{B}), the dynamic retard value (Δ α _{Z1}), which matches the speed at the start of the dynamic process, or rather at the start of the observation time, is reduced by a given advance correction value (Δ α _{Z2}) if a dynamic retard value (Δ α _{Z1}) greater than zero has been stored.

2. Method for automatic adaptation of spark timing according to claim 1, characterised in that for each cylinder there is provided a speed characteristic.

3. Method for automatic adaptation of spark timing according to claim 1 or 2, characterised in that in the speed characteristics are provided speed ranges, preferably 16 identical basepoint ranges, with associated dynamic retard values (Δ α _{Z2}) which are identical across the ranges.

4. Method for automatic adaptation of spark timing according to any of claims 1 to 3, characterised in that should a plurality of knocking episodes occur during the observation time (t_{B}), a corresponding number of retard correction values (Δ α _{Z2}) are added.

5. Method for automatic adaptation of spark timing according to any of claims 1 to 4, characterised in that at least two dynamic processes with different speeds (S₁; S₂) can be recorded and accordingly different, associated triggering signals are emitted,
that associated with the respective dynamic processes with different speeds are different speed characteristics (Δ α _{Z1}(S₁); Δ α _{Z1} (S₂)) which are activated by the matching triggering signals.

6. Method for automatic adaptation of spark timing according to any of claims 1 to 5, characterised in that the waiting time (t_{W}) is specified with various values from a waiting time characteristic versus speed and is derived in accordance with the operating speed at the start of the dynamic process.

7. Method for automatic adaptation of spark timing according to any of claims 1 to 6, characterised in that the resetting of the prorated dynamic value (α_{D}) to the steady-state prorated spark timing value (α_{V}) takes place in stepped fashion at each ignition operation by a given reduction advance adjustment value (Δ α _{Z3}).

8. Method for automatic adaptation of spark timing according to claim 7, characterised in that the resetting is stored in one or more resetting characteristics versus speed, with different resetting advance adjustment values (Δ α _{Z3}) and, if appropriate, chronologically different step lengths.

9. Method for automatic adaptation of spark timing according to any of claims 1 to 8, characterised in that the observation time (t_{B}) for the detection of knocking episodes with different values from one or more observation time characteristics versus speed is prespecified, if appropriate with different values allocated to dynamic processes with different speeds (S₁; S₂), and is deduced in accordance with the operating speed at the start of the dynamic process.

10. Method for automatic adaptation of spark timing according to any of claims 1 to 9, characterised in that the retard correction value (Δ α _{Z2}) and/or the advance correction value (Δ α _{Z1}) are prespecified with different values from one or more correction value characteristics versus speed, if appropriate with different values allocated to dynamic processes with different speeds (S₁; S₂) and/or individual cylinders, and are deduced in accordance with the operating speed at the start of the dynamic process.

11. Method for automatic adaptation of spark timing according to any of claims 1 to 10, characterised in that as the fundamental basis there is provided an initialisation characteristic with dynamic retard values (Δ α _{Z1}) which are preferably identical for all cylinders.

12. Method for automatic adaptation of spark timing according to any of claims 1 to 11, characterised in that in order to protect the adaptation from shifting, a limitation to maximum dynamic adjustment values is provided.

13. Method for automatic adaptation of spark timing according to any of claims 1 to 12, characterised in that the device for detecting the dynamic process consists of a pressure pick-up for detecting the intake manifold pressure, a derivative unit for detecting the chronological derivation of a pressure change (dp) and a threshold sensor for comparing the derivation value (dp/dt) with one or more threshold values (S₁; S₂).

14. Method for automatic adaptation of spark timing according to any of claims 1 to 12, characterised in that the device for detecting the dynamic process consists of a position sensor in respect of the throttle valve setting, a derivative unit for detecting the chronological derivation of a position change (ds) and a threshold sensor for comparing the derivation value (ds/dt) with one or more threshold values.

15. Method for automatic adaptation of spark timing according to any of claims 1 to 12, characterised in that the device for detecting the dynamic process consists of a position sensor in respect of the angular setting of the throttle valve, a characteristic stored in dependence on the speed and the throttle angle for the absolute intake manifold pressure (p), and a threshold sensor for comparing the derivation value of the stored absolute intake manifold pressure (dp/dt) with one or more threshold values.

## Revendications

1. Procédé pour l'adaptation automatique du point d'allumage en régime dynamique pour un moteur à combustion interne à allumage commandé comportant
un système d'allumage électronique qui délivre, en fonction de paramètres de fonctionnement, une valeur de champ caractéristique en tant que valeur initiale (α_{V}) du point d'allumage,
un dispositif qui déteste un régime dynamique ou le début de celui-ci et délivre un signal de déclenchement correspondant, et
un dispositif pour la détection de combustions détonantes,
caractérisé en ce que des valeurs peuvent être reportées, en tant que valeurs de réglage de retard dynamiques (Δα_{Z1}), sur une courbe caractéristique de régimes en fonction de la vitesse de rotation du moteur à combustion interne,
en ce que, lors d'un régime dynamique avec augmentation de la demande de charge, une valeur de réglage de retard dynamique (Δα_{Z1}), correspondant à la vitesse exacte de fonctionnement du moteur à combustion interne, est tirée de la courbe caractéristique de régimes,
en ce que cette valeur de réglage de retard dynamique (Δα_{Z1}) est additionnée, dans un sens de réglage correspondant à un retard à l'allumage, à la valeur initiale (α_{V}) du point d'allumage, pour donner une valeur initiale dynamique (α_{D}),
en ce que cette valeur initiale dynamique (α_{D}) est conservée pendant un certain temps d'attente prédéterminé (t_{W}) puis est ramenée à la valeur initiale (α_{V}) du point d'allumage issue du système d'allumage,
en ce que, lors du régime dynamique avec augmentation de la demande de charge, on fait démarrer un temps d'observation déterminé (t_{B}), pendant lequel on détecte si des combustions détonantes se manifestent sous la forme de phénomènes de cognement,
en ce qu'en cas de combustion détonantes pendant le temps d'observation (t_{B}), la valeur de réglage de retard dynamique (Δα_{Z1}), qui correspond à la vitesse de rotation au début du régime dynamique ou au début du temps d'observation, est augmentée d'une valeur déterminée (Δα_{Z2}) de correction dans le sens du retard, et
en ce qu'en cas de combustion non détonante pendant le temps d'observation, la valeur de réglage de retard dynamique (Δα_{Z1}), qui correspond à la vitesse de rotation au début du régime dynamique ou au début du temps d'observation est réduite d'une valeur déterminée (Δα_{Z2}) de correction dans le sens de l'avance, dans la mesure où une valeur de réglage de retard dynamique (Δα_{Z1}) supérieure à zéro est reportée sur la courbe.

2. Procédé pour l'adaptation automatique du point d'allumage selon la revendication 1, caractérisé en ce qu'une courbe caractéristique de régimes est prévue pour chaque cylindre.

3. Procédé pour l'adaptation automatique du point d'allumage selon la revendication 1 ou 2, caractérisé en ce qu'il est prévu, dans les courbes caractéristiques de régimes, des plages de régimes, de préférence seize plages égales de base, auxquelles sont associées des valeurs de réglage de retard dynamiques (Δα_{Z1}) égales dans les plages.

4. Procédé pour l'adaptation automatique du point d'allumage selon l'une quelconque des revendications 1 à 3, caractérisé en ce qu'en cas de plusieurs phénomènes de cognements pendant le temps d'observation (t_{B}), un nombre correspondant de valeurs (Δα_{Z2}) de correction dans le sens du retard est ajouté.

5. Procédé pour l'adaptation automatique du point d'allumage selon l'une quelconque des revendications 1 à 4, caractérisé en ce qu'au moins deux régimes dynamiques de rapidités différentes (S₁; S₂) peuvent être détectés et des signaux de déclenchement associés, différant de façon correspondante, sont délivrés, et en ce qu'il est associé, à chaque régime dynamique de rapidité différente, une courbe caractéristique de régimes différente (Δα_{Z1}(S1); Δα_{Z1}(S2)), ces courbes étant sélectionnées par les signaux de déclenchement correspondants.

6. Procédé pour l'adaptation automatique du point d'allumage selon l'une quelconque des revendications 1 à 5, caractérisé en ce que le temps d'attente (t_{W}) est prédéterminé avec des valeurs différentes sur une courbe caractéristique de temps d'attente en fonction de la vitesse de rotation et est pris selon la vitesse de fonctionnement au début du régime dynamique.

7. Procédé pour l'adaptation automatique du point d'allumage selon l'une quelconque des revendications 1 à 6, caractérisé en ce que le retour de la valeur initiale dynamique (α_{D}) à la valeur initiale fixe (α_{V}) du point d'allumage s'effectue par échelons, d'une valeur déterminée de retour (Δα_{Z3}) correspondant à un réglage dans le sens de l'avance, à chaque processus d'allumage.

8. Procédé pour l'adaptation automatique du point d'allumage selon la revendication 7, caractérisé en ce que le retour est porté sur une ou plusieurs courbes caractéristiques de retour en fonction de la vitesse de rotation, avec des valeurs différentes de retour (Δα_{Z3}) correspondant à un réglage dans le sens de l'avance et éventuellement des longueurs d'échelon différentes dans le temps.

9. Procédé pour l'adaptation automatique du point d'allumage selon l'une quelconque des revendications 1 à 8, caractérisé en ce que le temps d'observation (t_{B}) pour la détection de phénomènes de cognement est prédéfini avec des valeurs différentes par une ou plusieurs courbes caractéristiques de temps d'observation en fonction de la vitesse de rotation, éventuellement avec adjonction de valeurs différentes pour des régimes dynamiques de rapidités différentes (S1; S2), et il est tiré de la ou des courbes suivant la vitesse de fonctionnement au début du régime dynamique.

10. Procédé pour l'adaptation automatique du point d'allumage selon l'une quelconque des revendications 1 à 9, caractérisé en ce que la valeur (Δα_{Z2}) de correction dans le sens du retard et/ou la valeur (Δα_{Z2}) de correction dans le sens de l'avance sont prédéfinies avec des valeurs différentes par une ou plusieurs courbes caractéristiques de valeurs de correction en fonction de la vitesse de rotation, éventuellement avec adjonction de valeurs différentes pour des régimes dynamiques de rapidités différentes (S1; S2) et/ou pour les cylindres individuels, et elles sont tirées de la ou des courbes suivant la vitesse de fonctionnement au début du régime dynamique.

11. Procédé pour l'adaptation automatique du point d'allumage selon l'une quelconque des revendications 1 à 10, caractérisé en ce qu'il est prévu, comme base de départ, une courbe caractéristique d'initialisation avec des valeurs de réglage de retard dynamiques (Δα_{Z1}) qui sont de préférence égales pour tous les cylindres.

12. Procédé pour l'adaptation automatique du point d'allumage selon l'une quelconque des revendications 1 à 11, caractérisé en ce qu'il est prévu, pour la protection contre une dérive de l'adaptation, une limitation à des valeurs de réglage dynamiques maximales.

13. Procédé pour l'adaptation automatique du point d'allumage selon l'une quelconque des revendications 1 à 12, caractérisé en ce que le dispositif qui détecte le régime dynamique se compose d'un capteur de pression pour la détection de la pression dans le tuyau d'admission, d'un élément différenciateur pour la détermination de la dérivée temporelle d'une variation de pression (dp), et d'un discriminateur pour la comparaison de la valeur de la dérivée (dp/dt) à une ou plusieurs valeurs de seuil (S1; S2).

14. Procédé pour l'adaptation automatique du point d'allumage selon l'une quelconque des revendications 1 à 12, caractérisé en ce que le dispositif qui détecte le régime dynamique se compose d'un capteur de déplacement pour la position du papillon des gaz, d'un élément différenciateur pour la détermination de la dérivée temporelle d'un changement de position (ds), et d'un discriminateur pour la comparaison de la valeur de la dérivée (ds/dt) à une ou plusieurs valeurs de seuil.

15. Procédé pour l'adaptation automatique du point d'allumage selon l'une quelconque des revendications 1 à 12, caractérisé en ce que le dispositif qui détecte le régime dynamique se compose d'un capteur de déplacement pour la position angulaire du papillon des gaz, d'un champ caractéristique pour la pression absolue (p) dans le tuyau d'admission, tracé en fonction de la vitesse de rotation et de l'angle du papillon des gaz, et d'un discriminateur pour la comparaison de la valeur de la dérivée (dp/dt) de la pression absolue dans le tuyau d'admission, reportée sur le champ, à une ou plusieurs valeurs de seuil.
